# EUROPEAN PATENT APPLICATION

(11) **EP 2 308 728 A1**
(43) Date of publication of application: **13.04.2011**
(21) Application number: 08783860.3
(22) Date of filing: 04.08.2008
(51) Int. Cl.: B60S 1/54, B60S 1/56

(54) **AIR-BLOWING DEVICE FOR AUTOMOBILE BACK WINDSCREEN**

(71) Applicant: Wang, Jianzhong, Fujian 361000 (CN)
(72) Inventor: Wang, Jianzhong, Fujian 361000 (CN)
(74) Representative: Intès, Didier Gérard André
(86) International application number: PCT/CN2008/071867
(87) International publication number: WO 2010/015119

(57) **Abstract**

An air-blowing device for automobile back windscreen (10) comprises a control circuit (1), an air compressor (2), an air duct (3) and an air-blowing nozzle (4). The control circuit (1) controls the air compressor (2) to work or not to work, and an air vent of the air compressor (2) is connected with the air-blowing nozzle (4) through the air duct (3), said air-blowing nozzle (4) being installed on the automobile and facing towards the back windscreen (10). The device can be used in various automobiles to clear mist and water-droplets from the back windscreen (10) and make driver sight lines clearer.

## Description

### FIELD OF THE INVENTION

The invention relates to an air-blowing device for automobile back windscreen, which can be used in various automobiles to clear mist and water-droplets on the back windscreen.

### DESCRIPTION OF RELATED ART

With the rapid development of technology and continuously rising of the quality of people's living, the pace of working and living becomes progressively faster, in order to sufficiently enjoy a high quality of living, accommodate to the fast pace and save time, more and more people choose to buy a car, and it has become a trend to take a car instead of walking.

However, the safety of vehicles will be decreased greatly while driving in rain, and the reason, what is well known, mainly lies in slippery road in rainy days and bad sight; particularly in a wet day, the humidity outside of the automobile is high, the temperature difference is great between inside and outside of the automobile, thereby humid air easily forms the mist and water droplets on the automobile windows (including front and back windscreens, and side windows) or on the rear view mirrors, the automobile windows and the rear view mirrors thus become obscure and thereby further influence the sight of a driver. For example, the mist and water droplets are formed on the back windscreen, so that it is impossible for a driver to judge and determine the situation behind the car body through the back windscreen in backing; furthermore the driver cannot observe the vehicles right behind in driving due to raindrops coating the windscreens, this brings inconvenience to driver's driving and may even cause a traffic accident.

In this regard, the inventor adds an air-blowing device adjacent to the back windscreen of automobile, so as to disperse the mist and water droplets by blowing in time in rainy days, and thereby making the sight of the driver clearer and facilitating sale driving, and further avoiding the occurrence of traffic accidents. The present application is provided.

### SUMMARY OF THE INVENTION

The present invention aims to provide an air-blowing device for automobile back windscreen, which can be used in various automobiles to clear mist and water-droplets on the back windscreen and make the sight of a driver clearer.

In order to achieve the above object, the present invention proposes the following solution.

An air-blowing device for automobile back windscreen comprises a control circuit, an air compressor, an air duct and an air-blowing nozzle. The control circuit controls the operation of the air compressor, and an air vent of the air compressor is connected to the air-blowing nozzle through the air duct, said air-blowing nozzle is installed on the automobile facing the back windscreen.

The air-blowing nozzle is installed on the automobile roof and facing the back windscreen.

The air-blowing device further comprises a frequency adjuster and a sensor, wherein the sensor is used to detect the swing frequency of the wiper, and sends a signal to the control circuit, the control circuit processes this signal and then transmits an adjusting signal to the frequency adjuster, and the frequency adjuster controls the compression frequency of the air compressor based on the adjusting signal.

An automobile is equipped with the device of the present invention applying the above configuration. When the driver activates the air-blowing device as required while driving in rainy days, the control circuit controls the air compressor to start to operate, the air produced by the air compressor is blown out from the air-blowing nozzle through the air duct towards the back windscreen so as to disperse the mist and water droplets on the windscreen to keep the back windscreen clear and make the sight of the driver clearer, thereby the driver can judge and determine the situation behind the automobile through the back windscreen in backing, and observe the vehicles right behind in driving, this is more beneficial to safe driving and thereby avoids occurrence of traffic accidents.

### BRIEF DESCRIPTION OF THE DRAWINGS

Fig. 1 is a schematic view illustrating the configuration of an air-blowing device according to an embodiment of the present invention;

Fig. 2 is a schematic view illustrating a vehicle to which an air-blowing device according to an embodiment of the present invention is mounted; and

Fig. 3 is an enlarged view of Fig. 2.

Meanings of Main Reference Numbers

control circuit 1, air compressor 2,
air duct 3,
air-blowing nozzle 4,
frequency adjuster 6,

sensor 7,
wiper 8,
back windscreen 10,
roof 20.

### DETAILED DESCRIPTION OF PREFERRED EMBODIMENT

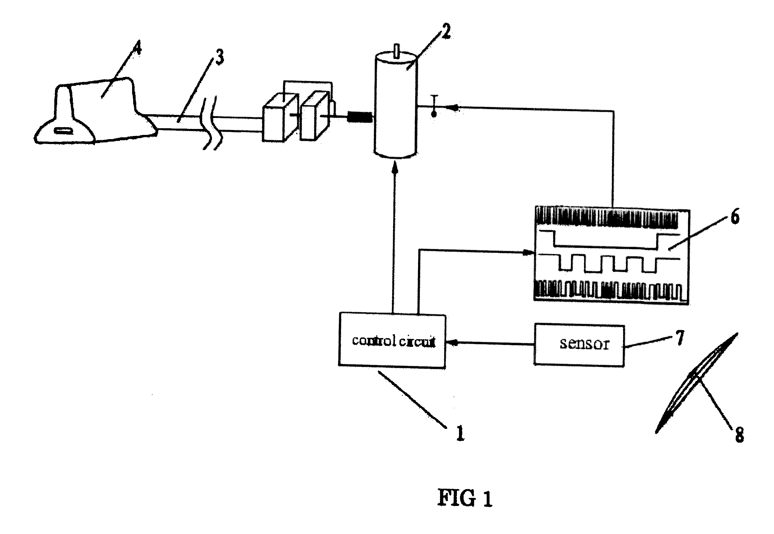

Fig. 1 shows the preferred embodiment of the present invention. Referring to Fig.1, an air-blowing device for automobile back windscreen comprises a control circuit 1. an air compressor 2, an air duct 3 and an air-blowing nozzle 4.

Wherein, the control circuit 1 controls the operation of the air compressor 2, and can be arranged on any position in the automobile invisibly as design required.

The air compressor 2 can also be arranged on any position in the automobile invisibly as required.

The air duct 3 is arranged in the automobile invisibly. One end of the air duct 3 is connected to the air vent of the air compressor 2, and the other end thereof is connected to the air-blowing nozzle 4.

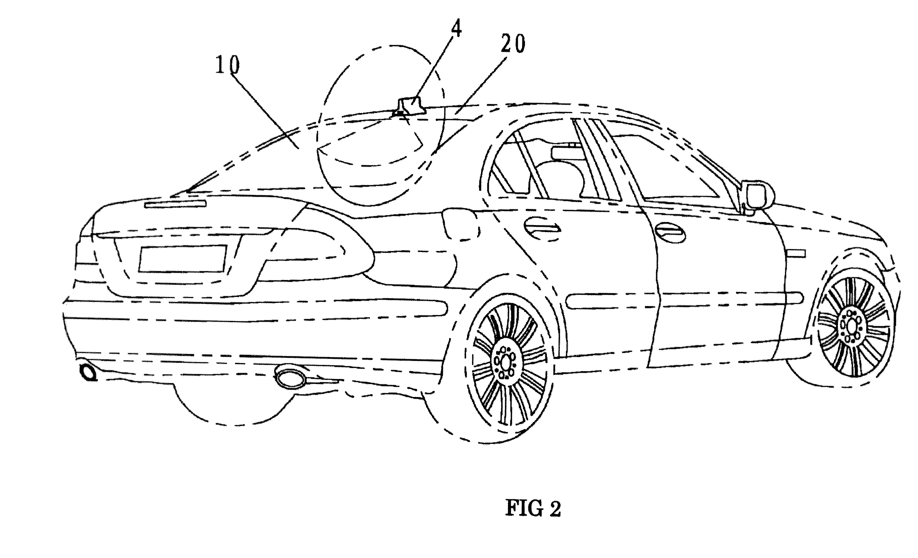

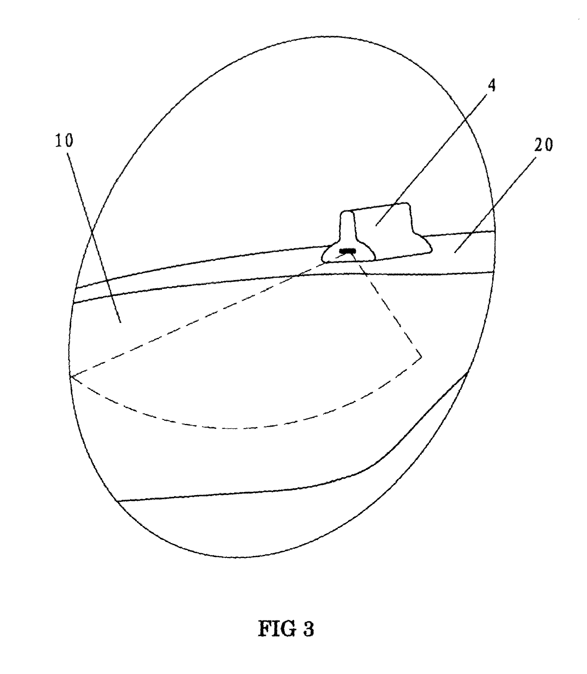

The air-blowing nozzle 4 is installed on the automobile facing the back windscreen 10. As shown in Figs. 2 and 3, the middle and upper regions of the back windscreen 10 are frequently used. Therefore, the air-blowing nozzle 4 is installed on the automobile roof 20 facing the back windscreen 10 in this embodiment.

The present invention may also add a frequency adjuster 6 and a sensor 7. As shown in Fig. 1, the sensor 7 is used to detect the swing frequency of the wiper 8, and sends a detected signal to the control circuit 1, the control circuit l processes the detected signal and then transmits an adjusting signal to the frequency adjuster 6, the frequency adjuster 6 controls the compression frequency of the air compressor 1 based on the adjusting signal. In this embodiment, the compression frequency of the air compressor 1 is controlled to be consistent with the working frequency of the wiper so that a better drying effect can be achieved. In this way, when the wiper 8 swings fast, i.e., in heavy rain, the compression frequency of the air compressor 2 is fast, thereby the wind blown out therefrom is strong; when the wiper 8 swings slowly, i.e., in light rain, the compression frequency of the air compressor 2 is slow and thereby the wind blown out therefrom is small. In a conclusion, this air-blowing device can automatically adjust the blow amount depending on the precipitation rain fall. It is more beneficial to drying of the mist and water droplets.

In a word, an air-blowing device according to the present invention is installed on an automobile. The driver can activate the device as required while driving in rainy days. In this instance the control circuit 1 controls the air compressor 2 to operate, the air produced by the air compressor 2 is blown out from the air-blowing nozzle 4 through the air duct 3 towards the back windscreen 10 so as to disperse the mist and water droplets on the windscreen 10 to keep the back windscreen 10 transparent and make the sight of the driver clearer, thereby the driver can judge and determine the situation behind the automobile through the back windscreen 10 in backing. This is more beneficial to safe driving and thereby avoids occurrence of traffic accidents.

The above embodiments are only for illustrating the technical solutions and features of the present invention rather than limiting the scope of the present invention. All equivalents, variations or modifications based on the spirit of the present invention should be within the scope of the present invention.

## Claims

1. An air-blowing device for automobile back windscreen, comprising: a control circuit, an air compressor, an air duct and an air-blowing nozzle, the control circuit controls the operation of the air compressor, an air vent of the air compressor is connected to the air-blowing nozzle via the air duct, and the air-blowing nozzle is installed on the automobile facing the back windscreen.

2. The air-blowing device for automobile back windscreen of claim 1, wherein, the air-blowing nozzle is installed on an automobile roof facing the back windscreen.

3. The air-blowing device for automobile back windscreen of claim 1, further comprising a frequency adjuster and a sensor, wherein the sensor is used to detect the swing frequency of a wiper, and sends a signal to the control circuit, the control circuit processes the signal and then transmits an adjusting signal to the frequency adjuster, and the frequency adjuster controls the compression frequency of the air compressor based on the adjusting signal.
